(19) Europäisches Patentamt

European Patent Office

Office européen des brevets

(11) **EP 4 280 129 A1**

(12) # EUROPEAN PATENT APPLICATION
published in accordance with Art. 153(4) EPC

(43) Date of publication:
**22.11.2023 Bulletin 2023/47**

(21) Application number: **21920685.1**

(22) Date of filing: **05.11.2021**

(51) International Patent Classification (IPC):
*G06Q 10/04* (2023.01)

(52) Cooperative Patent Classification (CPC):
**G06F 16/245; G06F 16/29; G06Q 10/04**

(86) International application number:
**PCT/CN2021/128973**

(87) International publication number:
**WO 2022/156309 (28.07.2022 Gazette 2022/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.01.2021 CN 202110100000**

(71) Applicant: **Huawei Technologies Co., Ltd.
Shenzhen, Guangdong 518129 (CN)**

(72) Inventor: **DING, Tao
Shenzhen, Guangdong 518129 (CN)**

(74) Representative: **Huawei European IPR
Huawei Technologies Duesseldorf GmbH
Riesstraße 25
80992 München (DE)**

(54) **TRAJECTORY PREDICTION METHOD AND APPARATUS, AND MAP**

(57)     This application discloses a trajectory prediction method and apparatus, and a map, and relates to the fields such as V2X, intelligent vehicles, self-driving, the internet of vehicles, and networked driving. In the method, at least one target point is first determined, where a distance between the target point and a vehicle falls within a first range; at least one reference trajectory between a target and the at least one target point is obtained based on the at least one target point and a geographical location of the target; and a predicted trajectory of the target is determined from the at least one reference trajectory. During trajectory prediction performed by using the method, not only historical movement information of the target is used, but also information about the target point is used, and more diversified information can be used. Therefore, the method not only can accurately predict a trajectory of the target in a next relatively short time period, but also can improve accuracy of predicting a trajectory of the target in a next relatively long time period.

FIG. 6

## Description

## TECHNICAL FIELD

This application relates to the field of intelligent transportation technologies, and specifically, to a trajectory prediction method and apparatus, and a map.

## BACKGROUND

In a traveling process, an intelligent vehicle usually needs to predict a trajectory of a target on a road. The target may be a pedestrian or another vehicle on the road. Therefore, the intelligent vehicle plans a driving behavior of the intelligent vehicle based on a prediction result, to avoid collision between the intelligent vehicle and the target.

Currently, when predicting a trajectory of a target, an intelligent vehicle usually obtains historical movement information of the target based on a sensor configured in the intelligent vehicle. The historical movement information usually includes a historical movement speed and a historical movement direction of the target and lane line information of a road on which the target is located. Then, the vehicle predicts the trajectory of the target based on the information, to obtain a predicted trajectory of the target.

In other words, in the conventional technology, during prediction of a trajectory of a target, historical movement information of the target is used. Therefore, in the conventional technology, a trajectory of the target in a next relatively short time period may be predicted with relatively high accuracy, but accuracy of predicting a trajectory of the target in a next relatively long time period is relatively low. For example, it is found through a plurality of tests that, in the conventional technology, only a trajectory of the target in next 3 to 5 seconds can be accurately predicted, and accuracy of predicting a trajectory in a longer time period is relatively low.

## SUMMARY

To resolve a problem that an existing trajectory prediction method can accurately predict only a trajectory of a target in a next relatively short time period, embodiments of this application provide a trajectory prediction method and apparatus, and a map.

According to a first aspect, an embodiment of this application discloses a trajectory prediction method, including:

> determining at least one target point, where a distance between the target point and a vehicle falls within a first range;
> obtaining at least one reference trajectory between a target and the at least one target point based on the at least one target point and a geographical location of the target; and

determining a predicted trajectory of the target from the at least one reference trajectory.

According to this solution, during trajectory prediction of the target, not only historical movement information of the target is used, but also information about the target point is used. Therefore, the solution not only can accurately predict a trajectory of the target in a next relatively short time period, but also can improve accuracy of predicting a trajectory of the target in a next relatively long time period.

In an optional design, the determining at least one target point includes:

> determining a first reference point by querying a map marked with a reference point or by querying a text file indicating the reference point, where a distance between the first reference point and the vehicle falls within the first range; and
> if a quantity of first reference points is not greater than n, determining the first reference point as the target point, where n is a preset positive integer; or if a quantity of first reference points is greater than n, selecting the at least one target point from the first reference points.

According to the foregoing design, the at least one target point can be determined based on the map marked with a reference place and/or the text file indicating the reference place.

In an optional design, the obtaining at least one reference trajectory between a target and the at least one target point includes:

> determining a historical trajectory from the target to the at least one target point as the at least one reference trajectory; or
> determining a shortest trajectory between the target and any one of the at least one target point as a reference trajectory when a traffic rule is met.

In an optional design, the determining a predicted trajectory of the target from the at least one reference trajectory includes:

> determining a short-term trajectory of the target in next s seconds based on a movement trend of the target;
> determining confidence of the at least one reference trajectory based on the short-term trajectory, where the confidence of the reference trajectory indicates a degree of fitting between the reference trajectory and the short-term trajectory; and
> determining a reference trajectory with highest confidence as the predicted trajectory of the target.

According to the foregoing design, the predicted trajectory can be determined from the reference trajectory based on the confidence of the reference trajectory. Higher confidence of the reference trajectory indicates that the reference trajectory more fits the short-term trajectory. Therefore, the predicted trajectory determined in the foregoing design is a reference trajectory that is in the reference trajectory and that most fits the movement trend of the target.

In an optional design, the determining a short-term trajectory of the target in next s seconds based on a movement trend of the target includes:

determining, as the short-term trajectory, a trajectory that is obtained after the target moves for s seconds under the current movement trend; or
determining a second parameter of the target based on the movement trend of the target, where the second parameter of the target includes a historical movement speed and a historical movement direction of the target, a geographical location of the target, and environment information of the target; and after the second parameter is input into a neural network model, obtaining the short-term trajectory that is of the target in the next s seconds and that is output by the neural network model.

In an optional design, the determining confidence of the at least one reference trajectory based on the short-term trajectory includes:

determining a projection value of the short-term trajectory on the at least one reference trajectory according to the following formula, where the projection value is the confidence of the at least one reference trajectory:

$$z_{\vec{a}\to\vec{b}} = \left|\vec{a}\right| * \left|\vec{b}\right| * \cos \partial \text{ ,}$$

where
$z_{\vec{a}\to\vec{b}}$ is a projection value of the short-term trajectory $\vec{a}$ on a reference trajectory $\vec{b}$; $\partial$ is an included angle between the short-term trajectory $\vec{a}$ and the reference trajectory $\vec{b}$; and the reference trajectory $\vec{b}$ is any one of the at least one reference trajectory.

In an optional design, the method further includes:
adjusting a driving behavior of the vehicle after it is determined, based on the predicted trajectory, that the vehicle is about to collide with the target.

According to this design, the driving behavior of the vehicle can be planned based on the predicted trajectory, to improve a driving planning capability of the vehicle, and ensure safety and comfort of the vehicle.

According to a second aspect, an embodiment of this application discloses a trajectory prediction apparatus, including:

a processor and a transceiver interface, where the transceiver interface is configured to receive information about a sensor; and
the processor is configured to: determine at least one target point based on the information about the sensor, where a distance between the target point and a vehicle falls within a first range; obtain at least one reference trajectory between a target and the at least one target point based on the at least one target point and a geographical location of the target; and determine a predicted trajectory of the target from the at least one reference trajectory.

In an optional design, the processor is specifically configured to: determine a first reference point by querying a map marked with a reference point or by querying a text file indicating the reference point, where a distance between the first reference point and the vehicle falls within the first range; and

if a quantity of first reference points is not greater than n, determine the first reference point as the target point, where n is a preset positive integer; or
if a quantity of first reference points is greater than n, select the at least one target point from the first reference points.

In an optional design, the processor is specifically configured to determine a historical trajectory from the target to the at least one target point as the at least one reference trajectory; or
the processor is specifically configured to determine a shortest trajectory between the target and any one of the at least one target point as a reference trajectory when a traffic rule is met.

In an optional design, the processor is specifically configured to: determine a short-term trajectory of the target in next s seconds based on a movement trend of the target;

determine confidence of the at least one reference trajectory based on the short-term trajectory, where the confidence of the reference trajectory indicates a degree of fitting between the reference trajectory and the short-term trajectory; and
determine a reference trajectory with highest confidence as the predicted trajectory of the target.

In an optional design, the processor is specifically configured to determine, as the short-term trajectory, a trajectory that is obtained after the target moves for s seconds under the current movement trend; or

the processor is specifically configured to: determine a second parameter of the target based on the movement trend of the target, where the second parameter of the target includes a historical movement speed and a historical movement direction of the target, a geographical location of the target, and environment information of the target; and

after the second parameter is input into a neural network model, obtain the short-term trajectory that is of the target in the next s seconds and that is output by the neural network model.

In an optional design, the processor is specifically configured to determine a projection value of the short-term trajectory on the at least one reference trajectory according to the following formula, where the projection value is the confidence of the at least one reference trajectory:

$$z_{\vec{a} \to \vec{b}} = \left| \vec{a} \right| * \left| \vec{b} \right| * \cos \partial ,$$

where

$Z_{\vec{a} \to \vec{b}}$ is a projection value of the short-term trajectory $\vec{a}$ on a reference trajectory $\vec{b}$ ; $\partial$ is an included angle between the short-term trajectory $\vec{a}$ and the reference trajectory $\vec{b}$ ; and the reference trajectory $\vec{b}$ is any one of the at least one reference trajectory.

In an optional design, the processor is further configured to adjust a driving behavior of the vehicle after it is determined, based on the predicted trajectory, that the vehicle is about to collide with the target.

According to a third aspect, an embodiment of this application provides a map, including:

a first layer, where
the first layer includes at least one reference point, and the reference point includes at least one of the following places: a place of a business industry, a place of an enterprise, and a place of a service industry.

The map provided in this embodiment of this application helps find, in a process of predicting a trajectory of a target, a reference point to which the target may travel, and can be used to determine a target point based on the found reference point and survey information of the target. Therefore, during trajectory prediction of the target by using the map provided in this embodiment of this application, not only historical movement information of the target is used, but also information about the target point is used. This helps improve accuracy of predicting a trajectory of the target in a next relatively long time period.

In an optional design, the reference point is a place passed by persons whose quantity is not less than a second threshold in a first time period.

According to a fourth aspect, an embodiment of this application provides a terminal apparatus, including:

at least one processor and a memory, where
the memory is configured to store program instructions; and
the processor is configured to invoke and execute the program instructions stored in the memory, so that the terminal apparatus performs the trajectory prediction method according to the first aspect.

According to a fifth aspect, an embodiment of this application provides a computer-readable storage medium, where
the computer-readable storage medium stores instructions. When the instructions are run on a computer, the computer is enabled to perform the method according to the first aspect.

According to a sixth aspect, an embodiment of this application provides a computer program product including instructions. When the computer program product runs on an electronic device, the electronic device is enabled to perform the method according to the first aspect.

The embodiments of this application provide the trajectory prediction method. In the method, the at least one target point is first determined, the at least one reference trajectory between the target of the vehicle and the at least one target point is determined, and the predicted trajectory of the target is determined from the at least one reference trajectory.

In other words, in the solution provided in the embodiments of this application, during trajectory prediction of the target, the target point needs to be determined. The target point is usually a place to which the target is more likely to travel. In this case, during trajectory prediction of the target by using the solution provided in the embodiments of this application, not only historical movement information of the target is used, but also information about the target point is used.

Compared with an existing method for predicting a trajectory of a target, in the solution provided in the embodiments of this application, more diversified information may be used during trajectory prediction of the target. Therefore, the solution provided in the embodiments of this application not only can accurately predict a trajectory of the target in a next relatively short time period, but also can improve accuracy of predicting a trajectory of the target in a next relatively long time period.

In the conventional technology, usually, only a trajectory of a target in next 3 to 5 seconds can be accurately predicted. However, the solution provided in the embodiments of this application can accurately predict a trajectory of the target in next 5 to 20 seconds. Compared with the conventional technology, the solution provided in the embodiments of this application improves accuracy of predicting a trajectory of the target in a next relatively long time period.

**BRIEF DESCRIPTION OF DRAWINGS**

FIG. 1 is a schematic diagram of a structure of a vehicle;

FIG. 2 is a schematic diagram of a structure of a computer system in a vehicle;

FIG. 3 is a schematic diagram of a connection relationship between a vehicle and a cloud side;

FIG. 4 is a schematic diagram of an application scenario of a trajectory prediction method in the conventional technology;

FIG. 5 is a schematic diagram of an application scenario of another trajectory prediction method in the conventional technology;

FIG. 6 is a schematic diagram of a working procedure of a trajectory prediction method according to an embodiment of this application;

FIG. 7(a) is an example diagram of a map according to the conventional technology;

FIG. 7(b) is an example diagram of a map in a trajectory prediction method according to an embodiment of this application;

FIG. 8 is an example diagram of a map in a trajectory prediction method according to an embodiment of this application;

FIG. 9 is an example diagram of an application scenario of a trajectory prediction method according to an embodiment of this application;

FIG. 10 is a schematic diagram of a structure of a trajectory prediction apparatus according to an embodiment of this application; and

FIG. 11 is a schematic diagram of a structure of a terminal apparatus according to an embodiment of this application.

**DESCRIPTION OF EMBODIMENTS**

The following describes the technical solutions in embodiments of this application with reference to the accompanying drawings in embodiments of this application.

Terms used in the following embodiments are merely intended to describe particular embodiments, but are not intended to limit this application. As used in this specification and appended claims of this application, singular expressions "one", "a", "the", "the foregoing", "this", and "the one" are also intended to include expressions such as "one or more", unless the contrary is clearly indicated in its context. It should be further understood that in the following embodiments of this application, "at least one" and "one or more" mean one, two, or more. The term "or" is used to describe an association relationship between associated objects and represents that three relationships may exist. For example, A or B may represent the following cases: Only A exists, both A and B exist, and only B exists, where A and B each may be in a singular or plural form. A character "/" generally indicates that the associated objects are in an "or" relationship.

Reference to "an embodiment", "some embodiments", or the like described in this specification indicates that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean reference to a same embodiment, instead, they mean "one or more but not all of embodiments", unless otherwise specifically emphasized. The terms "include", "comprise", "have", and their variants all mean "include but are not limited to", unless otherwise specifically emphasized.

An existing trajectory prediction method can accurately predict only a trajectory of a target in a next relatively short time period, and accuracy of predicting a trajectory of the target in a next relatively long time period is relatively low. To resolve this technical problem, embodiments of this application provide a trajectory prediction method and apparatus. The trajectory prediction method and apparatus may be applied to the fields such as vehicle to everything (vehicle to everything, V2X), intelligent vehicles, self-driving, the internet of vehicles, and networked driving.

The method may be applied to a vehicle. The vehicle is usually an intelligent vehicle. In a possible implementation, the vehicle may be configured to be in a full or partial self-driving mode. For example, when the vehicle is in a self-driving mode, the vehicle may further use a manual operation to determine current statuses of the vehicle and a surrounding environment of the vehicle and determine a possible behavior of at least one target such as another vehicle or a pedestrian in the surrounding environment; and control the vehicle based on the determined information. In addition, when the vehicle is in the self-driving mode, the vehicle may be configured to perform an operation without interacting with a person.

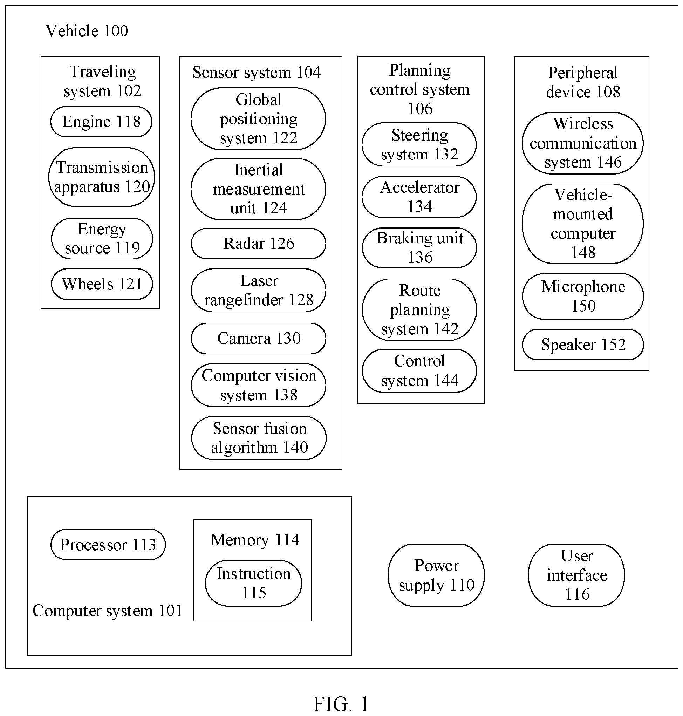

FIG. 1 is a functional block diagram of a vehicle 100 according to an embodiment of the present invention. As shown in FIG. 1, the vehicle 100 may include various subsystems, for example, a traveling system 102, a sensor system 104, a planning control system 106, one or more peripheral devices 108, a power supply 110, a computer system 101, and a user interface 116.

Optionally, the vehicle 100 may include more or fewer subsystems, and each subsystem may include a plurality of components. In addition, all subsystems and components in the vehicle 100 may be connected to each other in a wired or wireless manner.

The traveling system 102 may include a component that provides power for the vehicle 100. In an embodiment, the traveling system 102 may include an engine 118, an energy source 119, a transmission apparatus 120, and wheels 121. The engine 118 may be an internal combustion engine, a motor, an air compression engine, another type of engine, or a combination of a plurality of engines. The combination of a plurality of engines herein may include, for example, a hybrid engine formed by a gasoline engine and a motor, and a hybrid engine formed by an internal combustion engine and an air compression engine. The engine 118 converts the energy source 119 into mechanical energy.

Examples of the energy source 119 include gasoline, diesel, another petroleum-based fuel, propane, another compressed gas-based fuel, ethanol, a solar panel, a battery, or another power source. The energy source 119 may also provide energy for another system in the vehicle 100.

The transmission apparatus 120 may transmit mechanical power from the engine 118 to the wheels 121. The transmission apparatus 120 may include a gearbox, a differential, and a drive shaft. In an embodiment, the transmission apparatus 120 may further include another component, for example, a clutch. The drive shaft may include one or more shafts that may be coupled to one or more wheels 121.

The sensor system 104 may include several sensors that sense information about the vehicle 100 and a surrounding environment of the vehicle 100. For example, the sensor system 104 may include a positioning system 122 (the positioning system may be a GPS system, or may be a BeiDou system or another positioning system), an inertial measurement unit (inertial measurement unit, IMU) 124, a radar 126, a laser rangefinder 128, a camera 130, a computer vision system 138, and a sensor fusion algorithm 140. The sensor system 104 may further include a sensor (for example, an in-vehicle air quality monitor, a fuel gauge, or an engine oil thermometer) in an internal system of the vehicle 100. Data from one or more of these sensors may be used to detect a to-be-detected object and corresponding characteristics (a location, a shape, a direction, a speed, and the like) of the object. Such detection and recognition are key functions that are of the vehicle 100 and that are used for implementing a safe operation.

The global positioning system 122 may be configured to estimate a geographical location of the vehicle 100. The IMU 124 is configured to sense a location change and an orientation change of the vehicle 100 based on inertial acceleration. In an embodiment, the IMU 124 may be a combination of an accelerometer and a gyroscope.

The radar 126 may sense an object in the surrounding environment of the vehicle 100 by using a radio signal. In some embodiments, in addition to the object, the radar 126 may be configured to sense a speed or a traveling direction of the object.

The laser rangefinder 128 may sense, by using a laser, an object in an environment in which the vehicle 100 is located. In some embodiments, the laser rangefinder 128 may include one or more laser sources, a laser scanner, one or more detectors, and another system component.

The camera 130 may be configured to capture a plurality of images of the surrounding environment of the vehicle 100. The camera 130 may be a static camera or a video camera.

The computer vision system 138 may perform an operation to process and analyze the images captured by the camera 130, to recognize an object or a feature in the surrounding environment of the vehicle 100. The object or the feature may include a traffic signal, a road boundary, and a target. The computer vision system 138 may use an object recognition algorithm, a structure from motion (Structure from Motion, SFM) algorithm, video tracking, and another computer vision technology. In some embodiments, the computer vision system 138 may be configured to: draw a map for an environment, track an object, estimate a speed of the object, and the like.

The planning control system 106 is configured to control operations of the vehicle 100 and components of the vehicle 100. The planning control system 106 may include various components, including a steering system 132, an accelerator 134, a braking unit 136, a route control system 142, and a target avoidance system 144.

A forward direction of the vehicle 100 may be adjusted by operating the steering system 132. For example, in an embodiment, the steering system 132 may be a steering wheel system.

The accelerator 134 is configured to control an operating speed of the engine 118 to further control a speed of the vehicle 100.

The braking unit 136 is configured to control the vehicle 100 to decelerate. The braking unit 136 may use friction to slow down the wheels 121. In another embodiment, the braking unit 136 may convert kinetic energy of the wheels 121 into a current. The braking unit 136 may alternatively use another form to reduce a rotation speed of the wheels 121, to control the speed of the vehicle 100.

The route planning system 142 is configured to determine a traveling route of the vehicle 100. In some embodiments, the route planning system 142 may plan, for the vehicle 100 based on data from a sensor 138, the GPS 122, and one or more predetermined maps, a traveling route that can avoid a potential target in an environment. A trajectory planning method provided in embodiments of this application may be performed by the route planning system 142 to output a target traveling trajectory for the vehicle 100. The target traveling trajectory includes a plurality of target waypoints. Each of the plurality of target waypoints includes coordinates of the waypoint, and an allowable lateral error and an allowable speed error of the waypoint. The allowable lateral error described in this specification includes a value range of the allowable lateral error, and may be understood as short for the value range of the allowable lateral error in some cases. The "lateral" herein refers to a direction perpendicular to or approximately perpendicular to a traveling direction of the vehicle. The allowable lateral error essentially means an allowable lateral displacement error, that is, a value range of an allowable displacement error of the vehicle 100 in the direction perpendicular to or approximately perpendicular to the traveling direction of the vehicle. Details are not described below again.

The control system 144 is configured to generate control quantities of the accelerator, a brake, and a steering angle based on the traveling route/traveling trajectory output by the route planning system, to control the steering system 132, the accelerator 134, and the braking unit 136.

Certainly, in an example, the planning control system 106 may be added with or alternatively include components other than those shown and described. Alternatively, some of the components shown above may be deleted from the planning control system 106.

The vehicle 100 interacts with an external sensor, another vehicle, another computer system, or a user by using the peripheral device 108. The peripheral device 108 may include a wireless communication system 146, a vehicle-mounted computer 148, a microphone 150, or a speaker 152.

In some embodiments, the peripheral device 108 provides a means for interaction between a user of the vehicle 100 and the user interface 116. For example, the vehicle-mounted computer 148 may provide information for the user of the vehicle 100. The user interface 116 may further operate the vehicle-mounted computer 148 to receive a user input. In an implementation, the vehicle-mounted computer 148 may be operated by using a touchscreen. In another case, the peripheral device 108 may provide a means for communication between the vehicle 100 and another device located in the vehicle. For example, the microphone 150 may receive audio (for example a voice command or another audio input) from the user of the vehicle 100. Similarly, the speaker 152 may output audio to the user of the vehicle 100.

The wireless communication system 146 may wirelessly communicate with one or more devices directly or through a communication network. For example, the wireless communication system 146 may use 3G cellular communication such as CDMA, EVD0, or GSM/GPRS, 4G cellular communication such as LTE, or 5G cellular network communication. The wireless communication system 146 may communicate with a wireless local area network (wireless local area network, WLAN) through Wi-Fi. In some embodiments, the wireless communication system 146 may directly communicate with a device through an infrared link, Bluetooth, or ZigBee. Other wireless protocols, for example, various vehicle communication systems, such as the wireless communication system 146, may include one or more dedicated short range communication (dedicated short range communication, DSRC) devices, and these devices may include a device that performs public and/or private data communication with a vehicle or a roadside station.

The power supply 110 may provide power for various components of the vehicle 100. In an embodiment, the power supply 110 may be a rechargeable lithium-ion or lead-acid battery. One or more battery packs of such a battery may be configured as a power supply to provide power for various components of the vehicle 100. In some embodiments, the power supply 110 and the energy source 119 may be implemented together, for example, may be implemented in an all-electric vehicle.

Some or all of functions of the vehicle 100 are controlled by the computer system 101. The computer system 101 may include at least one processor 113, and the processor 113 executes an instruction 115 stored in a non-transient computer-readable medium such as a memory 114. The computer system 101 may alternatively be a plurality of computing devices that control an individual component or a subsystem of the vehicle 100 in a distributed manner.

The processor 113 may be any conventional processor, for example, a commercially available CPU. Alternatively, the processor may be a dedicated device such as an ASIC or another hardware-based processor. Although FIG. 1 functionally illustrates the processor, the memory, and other components of the computer system 101, a person of ordinary skill in the art should understand that the processor and the memory may actually include a plurality of other processors or memories that are not located in a same physical housing. For example, the memory may be a hard disk drive or another storage medium located in a housing different from that of the computer system 101. Therefore, a reference to the processor is understood as including a reference to a set of processors or memories that may or may not perform operations in parallel. Different from using a single processor to perform the steps described herein, for example, each of some components such as a steering component and a deceleration component may include its own processor, and the processor performs only calculation related to a function specific to the component; or subsystems such as the traveling system, the sensor system, and the planning control system may also include their own processors to implement calculation of related tasks of the corresponding subsystems to implement corresponding functions.

In various aspects described herein, the processor may be located far away from the vehicle and wirelessly communicate with the vehicle. In another aspect, some of the processes described herein are performed on a processor arranged inside the vehicle, while others are performed by a remote processor, including performing a step necessary for performing single manipulation.

In some embodiments, the memory 114 may include the instruction 115 (for example, program logic), and the instruction 115 may be executed by the processor 113 to perform various functions of the vehicle 100, including the functions described above. The memory 114 may also include additional instructions, including instructions used to send data to, receive data from, interact with, or control one or more of the traveling system 102, the sensor system 104, the planning control system 106, and the peripheral device 108.

In addition to the instruction 115, the memory 114 may store other related data, for example, a road map, route information, and a location, a direction, a speed, and other related information of the vehicle. Such information may be used by the vehicle 100 or specifically used by the computer system 101 during an operation of the vehicle 100 in an autonomous mode, a semi-autonomous mode, or a manual mode.

The user interface 116 is configured to provide information for or receive information from the user of the vehicle 100. Optionally, the user interface 116 may include one or more input/output devices in a set of peripheral devices 108, for example, the wireless communication system 146, the vehicle-mounted computer 148, the microphone 150, and the speaker 152.

The computer system 101 may control functions of the vehicle 100 based on inputs received from various subsystems (for example, the traveling system 102, the sensor system 104, and the planning control system 106) and the user interface 116. In some embodiments, the computer system 101 may perform an operation to provide control on many aspects of the vehicle 100 and the subsystems of the vehicle 100.

Optionally, one or more of the foregoing components may be installed separately from or associated with the vehicle 100. For example, the memory 114 may be partially or completely separated from the vehicle 100. The foregoing components may be communicatively coupled together in a wired or wireless manner.

Optionally, the foregoing components are merely examples. In actual application, a component may be added to or deleted from components in the foregoing modules based on an actual requirement. FIG. 1 should not be understood as a limitation on embodiments of the present invention.

A self-driving vehicle traveling on a road, for example, the vehicle 100 above, may recognize an object in a surrounding environment of the vehicle 100 to determine to perform adjustment on a traveling trajectory of the vehicle, including adjustment on a vehicle speed. The object may be another vehicle, a traffic control device, or another type of object. In some examples, each recognized object may be considered independently; and based on features of each object, for example, a current speed of the object, acceleration of the object, and a spacing between the object and the vehicle, trajectory planning of the self-driving vehicle, including the speed to be adjusted, may be determined.

Optionally, a computing device associated with the self-driving vehicle 100 (for example, the computer system 101 and the computer vision system 138 in FIG. 1) may predict a behavior of a recognized object based on features of the recognized object and a status of a surrounding environment (such as traffic, rain, and ice on a road) of the recognized object. Optionally, all recognized objects depend on behaviors of each other, and therefore all the recognized objects may be considered together to predict a behavior of a single recognized object. The vehicle 100 can plan a traveling trajectory (including a speed) of the vehicle 100 based on the predicted behavior of the recognized object. In addition, a specific status to which the self-driving vehicle needs to be adjusted (for speed adjustment, for example, the speed of the vehicle is increased, the speed of the vehicle is reduced, or the vehicle stops) is determined for the vehicle based on the planning result. In this process, the traveling trajectory of the vehicle 100 may also be determined by considering another factor, for example, a horizontal location of the vehicle 100 on a road on which the vehicle travels, a curvature of the road, proximity between a static object and the vehicle, and proximity between a dynamic object and the vehicle.

In addition to performing speed adjustment for the self-driving vehicle, based on the planning result, the computing device may provide an instruction for modifying a steering angle of the vehicle 100, so that the self-driving vehicle can follow a given trajectory or maintain a safe horizontal distance and a safe vertical distance from an object (for example, a car in an adjacent lane on a road) near the self-driving vehicle.

The vehicle 100 may be a car, a truck, a motorcycle, a bus, a boat, an airplane, a helicopter, a lawn mower, a recreational vehicle, a playground vehicle, a construction device, an electric trolley, a golf cart, a train, a handcart, or the like. This is not specifically limited in embodiments of the present invention.

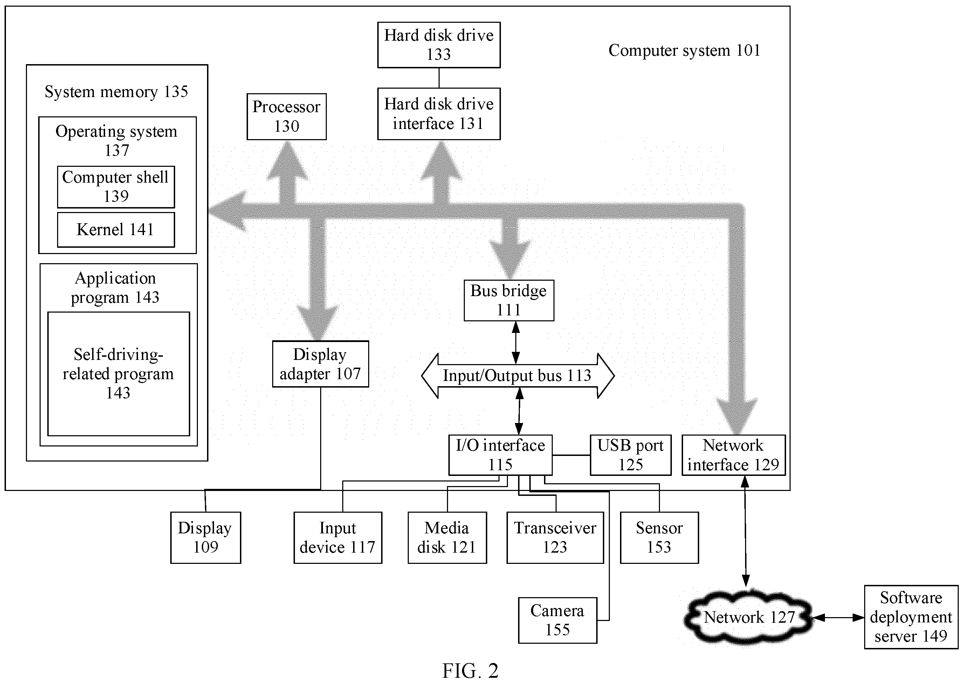

As shown in FIG. 2, the computer system 101 may include a processor 103, a system bus 105, a display adapter (video adapter) 107, a display 109, a bus bridge 111, an input/output bus (in/out but, I/O BUS) 113, an input/output (in/out, I/O) interface 115, a universal serial bus (Universal Serial Bus, USB) port 125, a network interface 129, a hard disk drive interface 131, a hard disk drive 133, and a system memory 135.

The processor 103 is coupled to the system bus 105. The processor 103 may be one or more processors, and each processor may include one or more processor cores. The display adapter may drive the display 109, and the display 109 is coupled to the system bus 105. The system bus 105 is coupled to the input/output bus (I/O BUS) 113 by using the bus bridge 111. The I/O interface 115 is coupled to the I/O bus 113. The I/O interface 115 communicates with a plurality of I/O devices. The plurality of I/O devices are, for example, an input device 117 (including examples such as a keyboard, a mouse, and a touchscreen), a media disk (media tray) 121 (for example, a CD-ROM and a multimedia interface), a transceiver 123 (which may send or receive a radio communication signal), a camera 155 (which may capture static and dynamic digital video images), and the USB port 125. Optionally, an interface connected to the I/O interface 115 may be the USB port 125.

The processor 103 may be any conventional processor, including a reduced instruction set computing ("RISC") processor, a complex instruction set computing ("CISC") processor, or a combination thereof. Optionally, the processor may be a dedicated apparatus such as an application-specific integrated circuit ("ASIC"). Optionally, the processor 103 may be a neural network processor or a combination of the neural network processor and the foregoing conventional processor.

Optionally, in various embodiments described in this specification, the computer system 101 may be located away from a self-driving vehicle, and may wirelessly communicate with the self-driving vehicle 100. In some implementations, some of the processes described in this specification may also be performed by a processor disposed inside a self-driving vehicle, while others are performed by a remote processor, including performing an action required for performing single manipulation.

The computer system 101 may communicate with a software deployment server 149 through the network interface 129. The network interface 129 includes a hardware network interface, for example, a network interface card. A network 127 may be an external network such as the Internet, or may be an internal network such as the Ethernet or a virtual private network (VPN). Optionally, the network 127 may alternatively be a wireless network, for example, a Wi-Fi network or a cellular network.

The hard disk drive interface 131 is coupled to the system bus 105. The hard disk drive interface 131 is connected to the hard disk drive 133. The system memory 135 is coupled to the system bus 105. Data running in the system memory 135 may include an operating system 137 and an application program 143 of the computer system 101.

The operating system OS 137 includes a computer shell (Shell) 139 and a kernel (kernel) 141. The shell 139 is an interface between a user and the operating system. The shell 139 is an outermost layer of the operating system. The shell 139 may be configured to manage interaction between the user and the operating system: The shell waits for the user's input, explains the user's input to the operating system, and processes various output results of the operating system.

The kernel 141 includes parts that are in the operating system and that are configured to manage a memory, a file, a peripheral, and a system resource. When directly interacting with hardware, the kernel of the operating system usually runs a process, provides inter-process communication, and provides CPU time slice management, interrupt, memory management, IO management, and the like.

The application program 143 includes a program related to control of vehicle self-driving, for example, a program for managing interaction between a self-driving vehicle and a target on a road, a program for controlling the self-driving vehicle to travel along a planned trajectory (including a speed), or a program for controlling interaction between the self-driving vehicle and another self-driving vehicle on the road. The application program 143 also exists in a system of the software deployment server 149. In an embodiment, when the application program 143 needs to be executed, the computer system 101 may download the application program 143 from the software deployment server 149.

A sensor 153 is associated with the computer system 101. The sensor 153 is configured to detect a surrounding environment of the computer system 101. For example, the sensor 153 may detect an animal, a vehicle, a target, and a pedestrian crosswalk. Further, the sensor may detect surrounding environments of objects such as the animal, the vehicle, the target, and the pedestrian crosswalk, for example, a surrounding environment of the animal such as another object around the animal, a weather condition, and brightness in the surrounding environment. Optionally, if the computer system 101 is located in a self-driving vehicle, the sensor may be a camera, an infrared sensor, a chemical detector, a microphone, or the like.

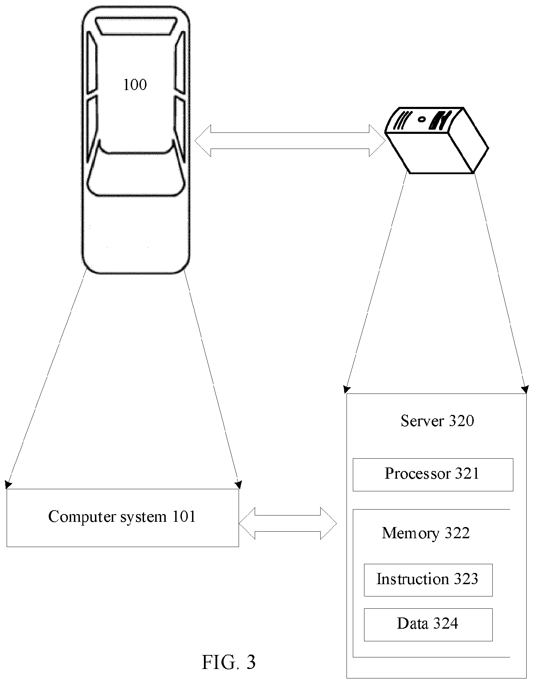

The computer system 101 may also receive information from another computer system or transfer information to the another computer system. Alternatively, sensor data collected by the sensor system 104 of the vehicle 100 may be transferred to another computer for data processing. As shown in FIG. 3, data from the computer system 101 may be transferred to a cloud-side computer 320 through a network for further processing. The network and an intermediate node may include various configurations and protocols, including the Internet, the World Wide Web, an intranet, a virtual private network, a wide area network, a local area network, a private network using proprietary communication protocols of one or more companies, an Ethernet, a wireless network, a hypertext transport protocol (hypertext transport protocol, HTTP) network, and various combinations thereof. Such communication may be performed by any device that can transfer data to another computer and transfer data from the another computer, for example, a modem and a wireless interface.

In an example, the computer 320 may include a server with a plurality of computers, for example, a load balancing server cluster, and exchanges information with different nodes of the network to receive data from the computer system 101, process the data, and transfer processed data. The server may have a configuration similar to that of the computer system 101, and is provided with a processor 321, a memory 322, an instruction 323, and data 324.

An existing trajectory prediction method can accurately predict only a trajectory of a target in a next relatively short time period, and accuracy of predicting a trajectory of the target in a next relatively long time period is relatively low. To clarify a problem existing in the conventional technology, the following describes a currently used trajectory prediction method.

In a currently commonly used trajectory prediction method, when predicting a trajectory of a target, a vehicle obtains historical movement information of the target by using a sensor configured in the vehicle. The historical movement information usually includes a historical movement speed and a historical movement direction of the target and lane line information of a road on which the target is located. For example, the vehicle may continuously photograph images of the target by using a camera configured in the vehicle, and determine the historical movement information of the target by using the photographed images.

Then, the vehicle may input the historical movement information of the target into a neural network model, and obtain information output by the neural network model. The information output by the neural network model is a predicted trajectory of the target.

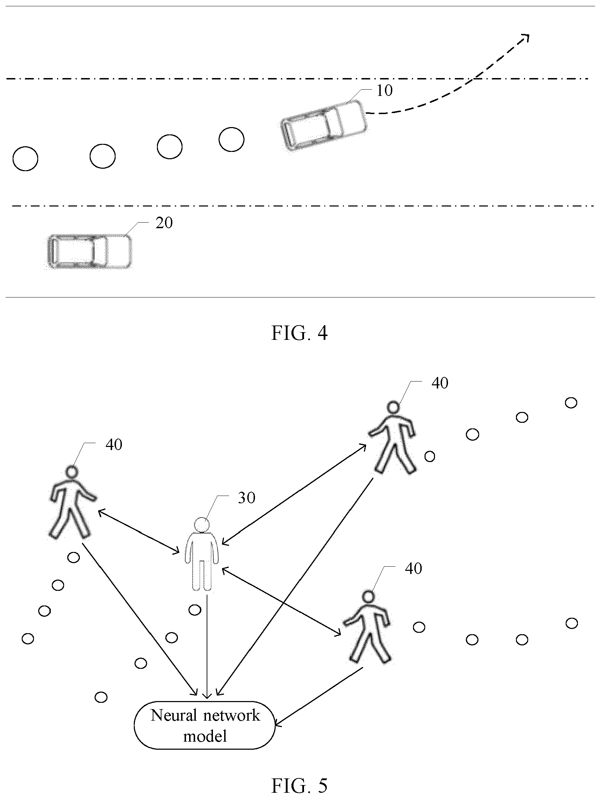

For example, refer to an example diagram of a scenario shown in FIG. 4. In FIG. 4, a dashed line in a straight line form represents a lane line, a first vehicle 10 travels in the figure, the first vehicle 10 may be a target of a second vehicle 20, and the second vehicle 20 may predict a trajectory of the first vehicle 10 according to the conventional technology.

In this case, the second vehicle 20 may photograph the first vehicle by using a camera configured in the second vehicle 20. In FIG. 4, geographical locations of four numbered circles on a rear side of a vehicle body of the first vehicle 10 are respectively locations of the first vehicle 10 when the camera photographs the first vehicle 10 at four different moments. In addition, in this scenario, a larger number of a circle indicates a later photographing moment.

In this example, after the camera in the second vehicle 20 photographs an image of the target, the second vehicle 20 determines, by processing the image, a historical movement speed and a historical movement direction of the first vehicle 10 and lane line information of a road on which the first vehicle 10 is located, and transmits the information to a neural network model.

After obtaining the information input by the second vehicle 20, the neural network model may output a predicted trajectory of the first vehicle. In this case, the second vehicle 20 may obtain the predicted trajectory of the first vehicle 10 based on the output of the neural network. As shown in FIG. 4, a curved dashed line is the predicted trajectory of the first vehicle.

However, in this solution, the trajectory of the target is predicted by using only the historical movement information of the target. Therefore, a feasible prediction time in this solution is relatively short. In other words, this solution can accurately predict only a trajectory of the target in a next relatively short time period, and accuracy of predicting a trajectory of the target in a next relatively long time period is relatively low.

In addition, currently, another trajectory prediction method may also be used. In this prediction method, when predicting a trajectory of a target, a vehicle may obtain historical movement information of the target by using a sensor configured in the vehicle, and the target may be referred to as a first target. Correspondingly, the historical movement information of the first target usually includes a historical movement speed and a historical movement direction of the first target and lane line information of a road on which the first target is located.

In a running process, the first target needs to avoid collision with another target of the vehicle. The another target of the vehicle may be referred to as a second target. Therefore, the first target adjusts a trajectory of the first target based on the second target, in other words, a movement status of the second target may affect the trajectory of the first target. Therefore, in this method, the vehicle may further obtain historical movement information of the second target. Correspondingly, the historical movement information of the second target usually includes a historical movement speed and a historical movement direction of the second target and lane line information of a road on which the second target is located.

Then, the vehicle may input the historical movement information of the first target and the historical movement information of the second target into a neural network model. Then, the vehicle uses an output of the neural network model as a predicted trajectory of the first target.

For example, refer to a schematic diagram shown in FIG. 5. FIG. 5 includes one first target 30 and three second targets 40, and circles behind each target represents a historical trajectory of the target. In this case, the vehicle may photograph the first target 30 and the second targets 40 by using a camera configured in the vehicle, determine historical movement information of the first target 30 and the second targets 40 based on photographed images, and then input the historical movement information of the first target 30 and the second targets 40 into a neural network model. In addition, the vehicle may obtain an output of the neural network model, and use the output of the neural network model as a predicted trajectory of the first target 30.

In this method, impact of another target on the trajectory of the first target is further considered. Therefore, compared with the previous method, accuracy of predicting a trajectory by using this method is improved. However, in this method, during trajectory prediction of a target, only historical movement information of the target is still used. Therefore, same as the previous method, this method can also accurately predict only a trajectory of the target in a next relatively short time period, and prediction accuracy of predicting a trajectory of the target in a next relatively long time period is relatively low.

A plurality of tests show that, when the foregoing two conventional technologies are used for trajectory prediction of a target, only a trajectory in next 3 to 5 seconds can be accurately predicted, and a trajectory in a longer time period cannot be accurately predicted.

Further, in a traveling process, the vehicle usually plans a driving behavior of the vehicle based on a predicted trajectory of the target. For example, when determining, based on the predicted trajectory of the target, that the vehicle may collide with the target, the vehicle may reduce a running speed, brake, stop, or the like.

However, according to the currently used trajectory prediction methods, only a trajectory of the target in a next relatively short time period can be accurately predicted. In this case, when planning the driving behavior by using the current trajectory prediction methods, the vehicle can only make a temporary decision based on the predicted trajectory in the relatively short time period. Therefore, in the traveling process, the vehicle needs to frequently adjust the driving behavior of the vehicle based on the predicted trajectory in the relatively short time period, so that the vehicle can only perform conservative planning on the driving behavior of the vehicle. Consequently, in the traveling process of the vehicle, phenomena such as emergency braking, emergency avoidance, frequent acceleration and deceleration, frequent stopping and traveling, and slow traveling of the vehicle are relatively prone to occur, affecting travel of the vehicle and riding experience of a person on the vehicle.

To resolve a problem that a current trajectory prediction method can accurately predict only a trajectory of a target in a next relatively short time period and accuracy of predicting a trajectory of the target in a next relatively long time period is relatively low, embodiments of this application provide a trajectory prediction method and apparatus, to improve accuracy of predicting a trajectory of a target in a next relatively long time period.

To clarify the solutions provided in this application, the following describes the solutions provided in this application with reference to the accompanying drawings by using various embodiments.

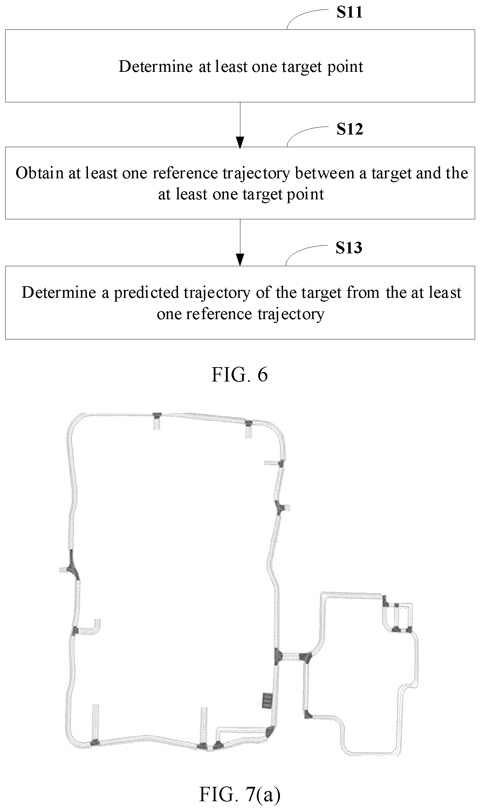

An embodiment of this application provides a trajectory prediction method. As shown in a schematic diagram of a working procedure shown in FIG. 6, the trajectory prediction method provided in this embodiment of this application includes the following steps.

Step S11: Determine at least one target point, where a distance between the target point and a vehicle falls within a first range.

In this embodiment of this application, the target point is usually a place that is in various places and to which the target is more likely to travel. The target may be a pedestrian or another vehicle on a road, and the place may be a residence, a working place, a garage, a consumption place (for example, a supermarket or a pharmacy), or the like.

In this step, the target point whose distance from the vehicle falls within the first range may be determined based on a geographical location of the vehicle.

The first range may be a specific distance range. For example, the first range may be 0 meters to 200 meters. In this case, the first range may be set at delivery of the vehicle. In addition, after the vehicle is delivered, an owner of the vehicle may further adjust the first range.

Alternatively, in another possible implementation, the vehicle may determine the first range based on a running speed of the vehicle and a time threshold. In this case, a product of the running speed and the time threshold is set as a second distance. The first range is usually a first distance to the second distance, and the first distance may be 10 meters. For example, if the running speed of the vehicle is 60 km/h and the time threshold is 12 seconds, the second distance is 200 meters. Correspondingly, the first range is 10 meters to 200 meters.

Step S12: Obtain at least one reference trajectory between a target and the at least one target point based on the at least one target point and a geographical location of the target.

In this embodiment of this application, the target point is a place to which the target may travel. In this case, a reference trajectory between the target and a target point is a possible running trajectory of the target.

Step S13: Determine a predicted trajectory of the target from the at least one reference traectory.

In this embodiment of this application, the at least one reference trajectory between the target and the at least one target point may be one or more reference trajectories. If the at least one reference trajectory between the target and the at least one target point is one reference trajectory, in this step, the reference trajectory is determined as the predicted trajectory of the target.

In addition, if the at least one reference trajectory between the target and the at least one target point is a plurality of reference trajectories, according to this step, one reference trajectory is selected from the plurality of reference trajectories, and the reference trajectory is used as the predicted trajectory of the target.

During determining of the predicted trajectory from the plurality of reference trajectories, a degree of fitting between each of the plurality of reference trajectories and a movement trend of the target may be determined, and a reference trajectory that is in the reference trajectories and that most fits the movement trend of the target is used as the predicted trajectory of the target.

This embodiment of this application provides the trajectory prediction method. In the method, the at least one target point is first determined, the at least one reference trajectory between the target of the vehicle and the at least one target point is determined, and the predicted trajectory of the target is determined from the at least one reference trajectory.

In other words, in the solution provided in this embodiment of this application, during trajectory prediction of the target, the target point needs to be determined. The target point is usually a place to which the target is more likely to travel. In this case, during trajectory prediction of the target by using the solution provided in this embodiment of this application, not only historical movement information of the target is used, but also information about the target point is used.

Compared with an existing method for predicting a trajectory of a target, in the solution provided in this embodiment of this application, more diversified information may be used during trajectory prediction of the target. Therefore, the solution provided in this embodiment of this application not only can accurately predict a trajectory of the target in a next relatively short time period, but also can improve accuracy of predicting a trajectory of the target in a next relatively long time period.

In the conventional technology, usually, only a trajectory of a target in next 3 to 5 seconds can be accurately predicted. However, the solution provided in this embodiment of this application can accurately predict a trajectory of the target in next 5 to 20 seconds. Compared with the conventional technology, the solution provided in this embodiment of this application improves accuracy of predicting a trajectory of the target in a next relatively long time period.

Further, because the solution provided in this embodiment of this application can accurately predict a trajectory of the target in a next relatively long time period, and a vehicle plans a driving behavior of the vehicle by using the predicted trajectory of the target, compared with the conventional technology, when the vehicle plans the driving behavior of the vehicle by using the predicted trajectory determined in this embodiment of this application, the vehicle can plan a driving behavior in a next relatively long time period in advance. In this way, the vehicle can make more proper planning in advance, thereby alleviating a current problem of improper planning.

In addition, because the vehicle can plan a driving behavior in a next relatively long time period, phenomena such as emergency braking, emergency avoidance, and frequent stopping and traveling of the vehicle can be reduced. Therefore, the solution provided in this embodiment of this application can further ensure safety and comfort of the vehicle while improving a planning capability of the vehicle for self-driving.

In the solution provided in this embodiment of this application, the at least one target point needs to be determined to obtain a reference trajectory based on the target point. The operation of determining at least one target point may include the following steps:

First, a first reference point is determined by querying a map marked with a reference point or by querying a text file indicating the reference point. A distance between the first reference point and the vehicle falls within the first range.

In the solution provided in this embodiment of this application, during determining of the first reference point, a map may be applied. Compared with an existing map, a layer marked with at least one reference point is added to the map applied in this embodiment of this application. The reference point is usually a place to which the target may travel, for example, a community entrance, a garage, a hospital, a government agency, a company, a bus stop, a shopping mall, a supermarket, an upper and lower ramp, a crossroad, or a pedestrian crosswalk.

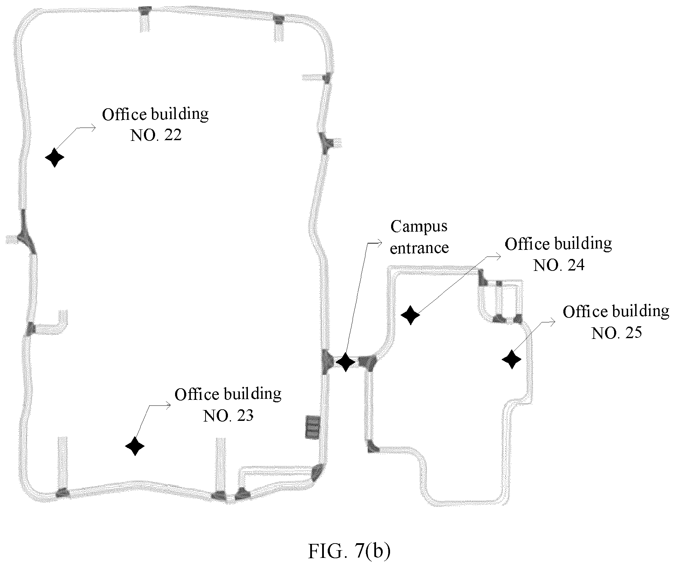

To clarify a difference between the map applied in this embodiment of this application and the existing map, the following discloses an example. The example provides FIG. 7(a) and FIG. 7(b). FIG. 7(a) is a schematic diagram of a map in the conventional technology, and the map represents a campus. FIG. 7(b) is the map that is marked with a reference point and that is applied in this embodiment of this application. The map not only includes the campus shown in FIG. 7(a), but also includes a layer marked with a plurality of reference points. The reference points include office buildings No. 22 to No. 25 and a campus entrance.

The map marked with a reference point may be stored in a cloud server, and the vehicle that performs trajectory prediction interacts with the cloud server to query the map. In addition, the map marked with a reference point may alternatively be stored in the vehicle. In addition, the vehicle may determine a geographical location of the vehicle on the map through positioning, and then determine, by querying the map, the first reference point whose distance from the vehicle falls within the first range.

In addition, the map may be drawn in advance. In addition, in an application process, the cloud server or the vehicle may further update the map based on a received operation, to add a reference point to the map or delete a reference point marked on the map.

In another implementation solution, the vehicle may determine the first reference point by querying the text file. The text file indicates a reference point. For example, the text file may be a table file recording longitude and latitude locations of reference points. In this case, the first reference point may alternatively be determined by querying the text file and the geographical location of the vehicle.

In this implementation solution, the text file may also be stored in the cloud server or stored in the vehicle. In addition, in an application process, the cloud server or the vehicle may further update the text file based on a received operation, to add or delete a reference point.

Then, if a quantity of first reference points is not greater than n, the first reference point is determined as the target point, where n is a preset positive integer; or if a quantity of first reference points is greater than n, the at least one target point is selected from the first reference points.

The first reference point may be determined by querying the map marked with a reference point or by querying the text file indicating the reference point. There may be one or more first reference points. In this case, if the quantity of first reference points is not greater than n, it indicates that the quantity of first reference points is relatively small, and it is determined that all the first reference points are target points; or if the quantity of first reference points is greater than n, it indicates that the quantity of first reference points is relatively large, and the first reference points may be further screened to determine the target point from the first reference points.

Herein, n is a preset positive integer. In a possible implementation, n may be 3.

In a possible screening manner, n first reference points that are in the first reference points and that are corresponding to a highest people flow in a time period may be determined as target points. The time period may be 24 hours prior to a current time, or the time period may be a time period that is relatively close to a current moment. For example, if the current moment is 11:00 a.m., the time period may be 10:00 to 11:00 yesterday.

Alternatively, in another possible screening manner, the vehicle may determine the target point from the first reference points based on survey information of the target. When it is confirmed that the target has given a permission, the survey information of the target may be appearance frequency, an appearance time, a consumption record, or the like of the target at the first reference point. The consumption record usually records an appearance time and a quantity of appearance times of the target at each consumption place. Appearance frequency and the appearance time of the target at the consumption place may also be determined based on the consumption record.

In this case, during selection of a target point from the first reference points, a first reference points that are in first reference points to which the target has traveled and that are corresponding to highest frequency may be determined as target points based on the survey information of the target; or a first reference point to which the target has traveled at historical frequency greater than a first threshold is determined as the target point; or the first b first reference points to which the target has traveled at times closest to a current time are determined as target points, where both a and b are preset positive integers.

For example, when the vehicle travels in an industrial park, each first reference point is a place in the industrial park, for example, an office building, a supermarket, or a dining hall in the industrial park, and each person who moves in the industrial park is a staff member in the industrial park. To improve traveling safety of the vehicle in the industrial park, a staff member in the industrial park agrees that the vehicle may obtain survey information of the staff member. The survey information includes appearance frequency, a consumption record, or the like of the staff member at each first reference point.

In this case, when a staff member in the industrial park walks in the industrial park, the staff member is a target, and the vehicle may select a target point from the first reference points by using the survey information of the staff member.

After the target point is determined, the at least one reference trajectory between the target and the at least one target point may be determined. Because the target point is a place to which the target may travel, the at least one reference trajectory usually includes a trajectory along which the target is about to run. In the solution provided in this embodiment of this application, the reference trajectory may be determined in a plurality of manners.

In a possible implementation, the obtaining at least one reference trajectory between a target and the at least one target point includes the following step: determining a historical trajectory from the target to the at least one target point as the at least one reference trajectory.

In this embodiment of this application, the target point is usually a place to which the target has traveled. In this case, the historical trajectory from the target to the target point may be used as the reference trajectory.

Alternatively, in another possible implementation, the determining at least one reference trajectory between a target and the at least one target point includes the following step: determining a shortest trajectory between the target and any one of the at least one target point as a reference trajectory when a traffic rule is met.

In this implementation, when the traffic rule is met, fitting may be performed on a geographical location of a target point and a geographical location of the target, possible trajectories between the target point and the target are determined by fitting, and a shortest trajectory between a target point and the target is determined as a reference trajectory.

In this application, a method for determining a reference trajectory based on a historical trajectory of the target and a method for determining a reference trajectory based on a shortest trajectory between the target and a target point are provided. In addition, a reference trajectory may alternatively be determined based on both manners. In this case, it is determined that a historical trajectory from the target to a target point is a reference trajectory, and it is also determined that a shortest trajectory between the target and the target point is a reference trajectory when the traffic rule is met.

After the at least one reference trajectory is determined, the predicted trajectory of the target needs to be determined from the at least one reference trajectory. If there is only one reference trajectory, the predicted trajectory of the target is determined from the at least one reference trajectory, and the operation may be implemented according to the following steps:

Step 1: Determine a short-term trajectory of the target in next s seconds based on a movement trend of the target.

In this embodiment of this application, the movement trend of the target may include information such as a movement direction and a movement speed of the target at a current moment. In this case, a trajectory of the target in the next s seconds may be predicted based on the movement trend of the target, to determine the short-term trajectory of the target.

A value of s may be determined based on accuracy of a method for determining the short-term trajectory. Generally, the value of s may range from 1 to 3.

Step 2: Determine confidence of the at least one reference trajectory based on the short-term trajectory.

The confidence of the reference trajectory indicates a degree of fitting between the reference trajectory and the short-term trajectory. In addition, higher confidence of the reference trajectory indicates that the reference trajectory more fits the short-term trajectory.

Step 3: Determine a reference trajectory with highest confidence as the predicted trajectory of the target.

In this embodiment of this application, a short-term trajectory of the target in a next short time period is predicted based on the movement trend of the target, and confidence of each of the at least one reference trajectory and the short-term trajectory is determined. The confidence may reflect a degree of fitting between each of the at least one reference trajectory and the short-term trajectory, and a reference trajectory with highest confidence is a reference trajectory that most fits the short-term trajectory. In this case, if the reference trajectory with highest confidence is determined as the predicted trajectory of the target, the predicted trajectory is a reference trajectory that is in the at least one reference trajectory and that most fits the movement trend of the target. Therefore, according to the foregoing steps, the reference trajectory that most fits the movement trend of the target may be determined from the at least one reference trajectory as the predicted trajectory of the target.

In this embodiment of this application, the short-term trajectory may be determined in a plurality of manners. In a possible implementation, the determining a short-term trajectory of the target in next s seconds based on a movement trend of the target includes:

determining, as the short-term trajectory, a trajectory that is obtained after the target moves for s seconds under the current movement trend.

The current movement trend of the target includes a current movement speed and a current movement direction of the target. In this case, the trajectory that is obtained after the target moves for s seconds under the current movement trend may be determined as the short-term trajectory.

In another possible implementation, the determining a short-term trajectory of the target in next s seconds based on a movement trend of the target includes:
Step 1: Determine a second parameter of the target based on the movement trend of the target, where the second parameter of the target includes a historical movement speed and a historical movement direction of the target, a geographical location of the target, and environment information of the target.

The environment information of the target usually includes lane line information, traffic light information, crossroad information, and the like at the geographical location of the target.

In a possible implementation, the target may be continuously photographed, then image processing is performed on images including the target, and the second parameter of the target is determined based on an image processing result.

Further, because the target needs to avoid another target in a running process, the second parameter of the target may further include related information of the another target around the target. The related information of the another target usually includes a historical movement speed and a historical movement direction of the another target, a geographical location of the another target, and the like.

Step 2: After the second parameter is input into a neural network model, obtain the short-term trajectory that is of the target in the next s seconds and that is output by the neural network model.

The neural network model is usually a kinematics model. For example, the neural network model may be a long-short term memory (long-short term memory, LSTM) artificial neural network model. If the LSTM model applied in this embodiment of this application can accurately predict a trajectory of the target in approximately 3 seconds, s may be usually set to 3.

The neural network model may receive the second parameter of the target, predict a trajectory of the target based on the second parameter of the target, and output a short-term trajectory of the target in next s seconds. In this case, the short-term trajectory of the target in the next s seconds may be determined based on the output of the neural network model.

In the foregoing embodiment, two solutions for determining a short-term trajectory of the target in next s seconds are provided. In actual application, the two solutions may alternatively be applied at the same time, so that a predicted trajectory is jointly determined based on short-term trajectories determined by using the two solutions.

In the solution provided in this embodiment of this application, a predicted trajectory in reference estimation needs to be determined based on confidence of a reference trajectory. In a feasible implementation solution, the determining confidence of the at least one reference trajectory based on the short-term trajectory includes the following step:

determining a projection value of the short-term trajectory on the at least one reference trajectory according to the following formula, where the projection value is the confidence of the at least one reference trajectory:

$$z_{\vec{a} \to \vec{b}} = \left|\vec{a}\right| * \left|\vec{b}\right| * \cos \partial \text{ ,}$$

where

$z_{\vec{a}\to\vec{b}}$ is a projection value of the short-term trajectory $\vec{a}$ on a reference trajectory $\vec{b}$; $\partial$ is an included angle between the short-term trajectory $\vec{a}$ and the reference trajectory $\vec{b}$; and the reference trajectory $\vec{b}$ is any one of the at least one reference trajectory.

In this implementation solution, the confidence of the at least one reference trajectory is determined by using a projection method. A projection value of the short-term trajectory on one reference trajectory refers to a length of a projection obtained after the short-term trajectory is projected onto a projection plane on which the reference trajectory is located. A larger projection value of a reference trajectory indicates that the reference trajectory more fits the short-term trajectory, and correspondingly confidence of the reference trajectory is higher.

To clarify the solution for determining confidence of a reference trajectory in this application, the following example is disclosed.

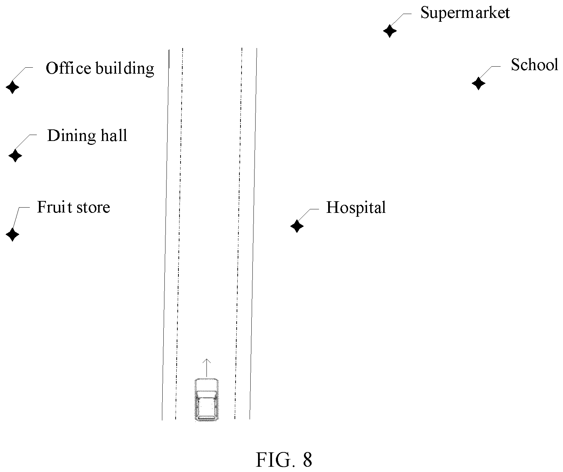

In this example, FIG. 8 is a schematic diagram of a map applied in an embodiment of this application. Reference points are marked on the map, and the reference points include a hospital, an office building, a dining hall, a fruit store, a school, and a supermarket. A distance between a vehicle and each of the school and the supermarket exceeds a first range, and a distance between the vehicle and each of the hospital, the office building, the dining hall, and the fruit store falls within the first range. Therefore, in this example, the hospital, the office building, the dining hall, and the fruit store may be determined as first reference points.

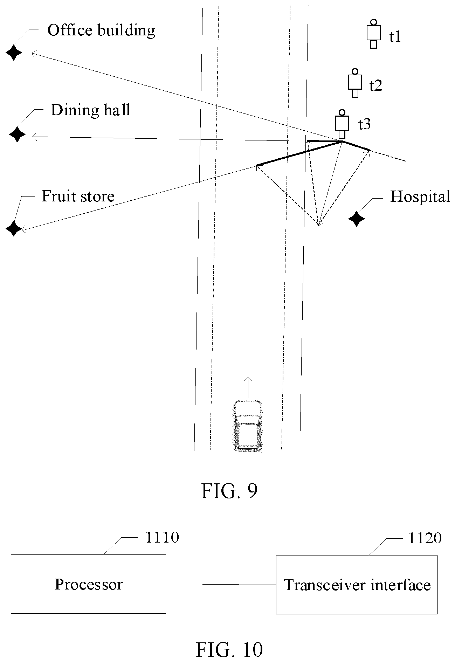

As shown in FIG. 9, in this example, a target is a pedestrian. In addition, the pedestrian passes through three geographical locations at moments 11, t2, and t3 in a time sequence. The three geographical locations each are marked by a portrait in FIG. 9, and a current moment is the moment t3.

It is determined, based on identity information of the pedestrian, that historical frequency at which the pedestrian goes to the hospital is 1, historical frequency at which the pedestrian goes to the office building is 26, historical frequency at which the pedestrian goes to the dining hall is 50, and historical frequency at which the pedestrian goes to the fruit store is 10. In addition, in this example, a first threshold is 5, and a first reference point to which the target goes at historical frequency greater than the first threshold is determined as a target point. In this case, three first reference points, namely the office building, the dining hall, and the fruit store, may be determined as target points in this example. In addition, in FIG. 9, a reference trajectory between the pedestrian and each target point is drawn, and the reference trajectory is represented by a connection line with an arrow and pointing to each target point.

In this example, a short-term trajectory of the pedestrian in next s seconds may be determined based on a movement trend of the pedestrian. In FIG. 9, the short-term trajectory is represented by a line segment with an arrow. In addition, to distinguish from a reference trajectory, compared with a connection line representing the reference trajectory, the short-term trajectory is represented by a relatively thick line segment.

In this case, a projection value of the short-term trajectory on the reference trajectory needs to be determined. In FIG. 9, a dashed line represents a perpendicular line on a reference trajectory, there is an intersection between the perpendicular line and the reference trajectory, a connection line between the intersection and the geographical location of the pedestrian at the moment t3 is a projection of the short-term trajectory on the reference trajectory, and a length of the projection is a projection value of the short-term trajectory on the reference trajectory.

According to FIG. 9, it may be determined that a projection value of a reference trajectory between the pedestrian and the fruit store is the largest, and the projection value may be used as confidence of the reference trajectory between the pedestrian and the fruit store, so that the confidence of the reference trajectory between the pedestrian and the fruit store is the largest. In this case, it may be determined that the reference trajectory between the pedestrian and the fruit store is a predicted trajectory of the pedestrian.

In the foregoing embodiment, the method for determining a predicted trajectory based on confidence is described. In addition, the predicted trajectory may be determined in another manner. In another feasible implementation solution of this application, the determining a predicted trajectory of the target from the at least one reference trajectory includes the following steps:
First, historical frequency or a historical time at which the target travels to the at least one reference trajectory is determined.

Then, the predicted trajectory is determined from the at least one reference trajectory based on the historical frequency or the historical time at which the target travels to the at least one reference trajectory, where the predicted trajectory is a reference trajectory along which the target travels at highest historical frequency, or the predicted trajectory is a reference trajectory along which the target travels at a historical time closest to a current time.

In other words, in this implementation, the reference trajectory along which the target travels at the highest historical frequency is used as the predicted trajectory, or the reference trajectory along which the target travels at the historical time closest to the current time is used as the predicted trajectory.

According to the foregoing solution, the predicted trajectory of the target can be determined. In addition, the vehicle may plan a driving behavior of the vehicle based on the predicted trajectory of the target. In this case, the solution provided in this embodiment of this application further includes the following step:

adjusting a driving behavior of the vehicle after it is determined, based on the predicted trajectory, that the vehicle is about to collide with the target.

After it is determined, based on the predicted trajectory, that the vehicle is about to collide with the target, to avoid the collision, the vehicle needs to adjust the driving behavior of the vehicle. For example, the vehicle may avoid collision by performing an operation such as speeding up and bypassing, traveling at a reduced speed, or stopping and waiting.

In addition, if it is determined, based on the predicted trajectory, that the vehicle does not collide with the target, the vehicle may maintain a current driving behavior of the vehicle.

An existing trajectory prediction technology can accurately predict only a trajectory of a target in a next relatively short time period. Therefore, during planning of a driving behavior of a vehicle based on the trajectory predicted by using the conventional technology, only a driving behavior of the vehicle in a short time period can be planned. In this case, the vehicle usually needs to frequently adjust a driving behavior of the vehicle, and sometimes, there is even a phenomenon that the vehicle frequently stops and travels or a speed of the vehicle is unstable.

However, according to the foregoing step in this application, the vehicle can plan the driving behavior of the vehicle based on the predicted trajectory. Further, because the solution in this embodiment of this application can accurately predict a trajectory in a next relatively long time period, compared with the conventional technology, when the vehicle plans the driving behavior of the vehicle by using the predicted trajectory determined in this embodiment of this application, the vehicle can plan a driving behavior in a next relatively long time period in advance. This avoids frequent adjustment of the driving behavior, reduces phenomena such as emergency braking, emergency avoidance, and frequent stopping and traveling of the vehicle, and ensures safety and comfort of the vehicle.

The following provides apparatus embodiments of this application, and the apparatus embodiments may be used to execute the method embodiments of this application. For details that are not disclosed in the apparatus embodiments of this application, refer to the method embodiments of this application.

In implementation of the foregoing embodiments, an embodiment of this application discloses a trajectory prediction apparatus. As shown in a schematic diagram of a structure shown in FIG. 10, a driving behavior monitoring apparatus disclosed in this embodiment of this application includes a processor 1110 and a transceiver interface 1120.

The transceiver interface 1120 is configured to receive information about a sensor.

In a possible implementation, the trajectory prediction apparatus disclosed in this embodiment of this application is applied to a vehicle. In this case, the sensor may be a sensor disposed in the vehicle.

In this case, the sensor may include a camera, and the camera may continuously photograph a target, and then determine related information of the target by analyzing images including the target. For example, based on the images obtained by continuously photographing the target by using the camera, historical movement information of the target may be determined, and a movement trend of the target may be determined.

In addition, the sensor may further include a radar. In this case, the vehicle may determine a movement speed of the target by using the radar.

The processor 1110 is configured to: determine at least one target point based on the information about the sensor, where a distance between the target point and the vehicle falls within a first range; obtain at least one reference trajectory between the target and the at least one target point based on the at least one target point and a geographical location of the target; and determine a predicted trajectory of the target from the at least one reference trajectory.

During trajectory prediction of the target by using the solution provided in this embodiment of this application, the target point needs to be determined. Therefore, during trajectory prediction of the target by using the solution provided in this embodiment of this application, not only historical movement information of the target is used, but also information about the target point is used.

Compared with an existing method for predicting a trajectory of a target, in the solution provided in this embodiment of this application, more diversified information may be used during trajectory prediction of the target. Therefore, the solution provided in this embodiment of this application not only can accurately predict a trajectory of the target in a next relatively short time period, but also can improve accuracy of predicting a trajectory of the target in a next relatively long time period.

In the conventional technology, usually, only a trajectory of a target in next 3 to 5 seconds can be accurately predicted. However, the solution provided in this embodiment of this application can accurately predict a trajectory of the target in next 5 to 20 seconds. Compared with the conventional technology, the solution provided in this embodiment of this application improves accuracy of predicting a trajectory of the target in a next relatively long time period.

In the solution provided in this embodiment of this application, the processor is specifically configured to: determine a first reference point by querying a map marked with a reference point or by querying a text file indicating the reference point, where a distance between the first reference point and the vehicle falls within the first range;

if a quantity of first reference points is not greater than n, determine the first reference point as the target point, where n is a preset positive integer; or

if a quantity of first reference points is greater than n, select the at least one target point from the first reference points.

In the solution provided in this embodiment of this application, during determining of the first reference point, a map may be applied. Compared with an existing map, a layer marked with at least one reference point is added to the map applied in this embodiment of this application. The reference point is usually a place to which the target may travel, for example, a community entrance, a garage, a hospital, a government agency, a company, a bus stop, a shopping mall, a supermarket, an upper and lower ramp, a crossroad, or a pedestrian crosswalk. In this case, the processor may determine the first reference point by querying the map marked with a reference point.

The first reference point may be determined by querying the map marked with a reference point or by querying the text file indicating the reference point. There may be one or more first reference points. In this case, if the quantity of first reference points is not greater than n, it indicates that the quantity of first reference points is relatively small, and it is determined that all the first reference points are target points; or if the quantity of first reference points is greater than n, it indicates that the quantity of first reference points is relatively large, and the first reference points may be further screened to determine the target point in the first reference points.

n is a preset positive integer. In a possible implementation, n may be 3.

In the solution provided in this embodiment of this application, the processor may determine a reference trajectory. In a possible implementation solution, the processor is specifically configured to determine a historical trajectory from the target to the at least one target point as the at least one reference trajectory.

Alternatively, in another possible implementation solution, the processor is specifically configured to determine a shortest trajectory between the target and any one of the at least one target point as a reference trajectory when a traffic rule is met. In this case, when the traffic rule is met, the processor may perform fitting on a geographical location of a target point and a geographical location of the target, determine possible trajectories between the target point and the target by fitting, and determine a shortest trajectory between a target point and the target as a reference trajectory.

In the solution provided in this embodiment of this application, the processor is specifically configured to: determine a short-term trajectory of the target in next s seconds based on a movement trend of the target;

determine confidence of the at least one reference trajectory based on the short-term trajectory, where the confidence of the reference trajectory indicates a degree of fitting between the reference trajectory and the short-term trajectory; and

determine a reference trajectory with highest confidence as the predicted trajectory of the target.

The processor may determine the short-term trajectory in a plurality of manners. In a possible implementation solution, the processor is specifically configured to determine, as the short-term trajectory, a trajectory that is obtained after the target moves for s seconds under the current movement trend.

Alternatively, in another possible implementation solution, the processor is specifically configured to: determine a second parameter of the target based on the movement trend of the target, where the second parameter of the target includes a historical movement speed and a historical movement direction of the target, a geographical location of the target, and environment information of the target; and

after the second parameter is input into a neural network model, obtain the short-term trajectory that is of the target in the next s seconds and that is output by the neural network model.

In the solution provided in this embodiment of this application, the processor is specifically configured to determine a projection value of the short-term trajectory on the at least one reference trajectory according to the following formula, where the projection value is the confidence of the at least one reference trajectory:

$$z_{\vec{a} \to \vec{b}} = \left| \vec{a} \right| * \left| \vec{b} \right| * \cos \partial ,$$

where

$z_{\vec{a} \to \vec{b}}$ is a projection value of the short-term trajectory $\vec{a}$ on a reference trajectory $\vec{b}$ ; $\partial$ is an included angle between the short-term trajectory $\vec{a}$ and the reference trajectory $\vec{b}$ ; and the reference trajectory $\vec{b}$ is any one of the at least one reference trajectory.

In addition, the processor may further determine the predicted trajectory from a reference trajectory based on historical frequency or a historical time at which the target travels to the reference trajectory. In this case, the processor is specifically configured to: determine historical frequency or a historical time at which the target travels to the at least one reference trajectory; and

determine the predicted trajectory from the at least one reference trajectory based on the historical frequency or the historical time at which the target travels to the at least one reference trajectory, where the predicted trajectory is a reference trajectory along which the target travels at highest historical frequency, or the predicted trajectory is a reference trajectory along which the target travels at a historical time closest to a current time.

Further, the vehicle to which the apparatus provided in this embodiment of this application is applied may adjust a driving behavior of the vehicle based on the predicted trajectory of the target.

In this case, the processor is further configured to adjust the driving behavior of the vehicle after it is determined, based on the predicted trajectory, that the vehicle is about to collide with the target.

After it is determined, based on the predicted trajectory, that the vehicle is about to collide with the target, to avoid the collision, the vehicle needs to adjust the driving behavior of the vehicle. For example, the vehicle may avoid collision by performing an operation such as speeding up and bypassing, traveling at a reduced speed, or stopping and waiting. Safety of the vehicle can be improved by adjusting the driving behavior of the vehicle.

In addition, if it is determined, based on the predicted trajectory, that the vehicle does not collide with the target, the vehicle may maintain a current driving behavior of the vehicle.

An existing trajectory prediction technology can accurately predict only a trajectory of a target in a next relatively short time period. Therefore, during planning of a driving behavior of a vehicle based on the trajectory predicted by using the conventional technology, only a driving behavior of the vehicle in a short time period can be planned. In this case, the vehicle usually needs to frequently adjust a driving behavior of the vehicle, and sometimes, there is even a phenomenon that the vehicle frequently stops and travels or a speed of the vehicle is unstable.

However, according to the foregoing step in this application, the vehicle can plan the driving behavior of the vehicle based on the predicted trajectory. Further, because the solution in this embodiment of this application can accurately predict a trajectory in a next relatively long time period, compared with the conventional technology, when the vehicle plans the driving behavior of the vehicle by using the predicted trajectory determined in this embodiment of this application, the vehicle can plan a driving behavior in a next relatively long time period in advance. This avoids frequent adjustment of the driving behavior, reduces phenomena such as emergency braking, emergency avoidance, and frequent stopping and traveling of the vehicle, and ensures safety and comfort of the vehicle.

An embodiment of this application provides a map. The map includes a first layer. The first layer includes at least one reference point, and the reference point includes at least one of the following places: a place of a business industry, a place of an enterprise, and a place of a service industry.

Compared with an existing map, the map provided in this embodiment of this application is additionally marked with a reference point, and the reference point is located at the first layer of the map. The reference point may include a place of a business industry, for example, a shopping mall and a supermarket. In addition, the reference point may further include a place of an enterprise, for example, an office building. Alternatively, the reference point may further include a place of a service industry, for example, a hospital.

In addition, the reference point may further include another place at which the target may stay, for example, a community entrance, a garage, a crossroad, and a pedestrian crosswalk.

For the map provided in this embodiment of this application, refer to the schematic diagrams shown in FIG. 7(b) and FIG. 8.

The first reference point may be determined by querying the map provided in this embodiment of this application. The first reference point is a reference point whose distance from a vehicle falls within a first range. In this case, at least one target point may be determined by using the first reference point, so that the vehicle predicts a trajectory of a target by using the at least one target point.

The map provided in this embodiment of this application helps find, in a process of predicting the trajectory of the target, a reference point to which the target may travel, and the vehicle determines a target point based on the found reference point and survey information of the target. Therefore, when the vehicle predicts the trajectory of the target by using the map provided in this embodiment of this application, not only historical movement information of the target is used, but also information about the target point is used. This helps improve accuracy of predicting a trajectory of the target by the vehicle in a next relatively long time period.

In a possible implementation, the map provided in this embodiment of this application is a map obtained after the first layer is set on an existing high-definition map. Precision of absolute coordinates of the high-definition map is relatively high. The precision of absolute coordinates is precision between a target on the map and an object in a real external world. In addition, road traffic information elements included in the high-definition map are more abundant and detailed. In this case, each reference point marked on the map provided in this embodiment of this application is more accurate, helping improve accuracy of performing trajectory prediction by the vehicle.

Further, on the map provided in this embodiment of this application, the reference point is a place passed by persons whose quantity is not less than a second threshold in a first time period.

The first time period may be 24 hours prior to a current time, or the first time period may be a time period that is relatively close to a current moment. For example, if the current moment is 11:00 a.m., the first time period may be 10:00 to 11:00 yesterday.

Because the reference point is a place passed by persons whose quantity is not less than the second threshold in the first time period, the reference point is a place with a relatively high people flow, and a probability that the target travels to the reference point is relatively high. In this case, the first reference point determined by the vehicle by querying the map is a place to which the target is more likely to travel. Therefore, when the vehicle performs trajectory prediction by using the first reference point, accuracy of performing trajectory prediction can be improved.

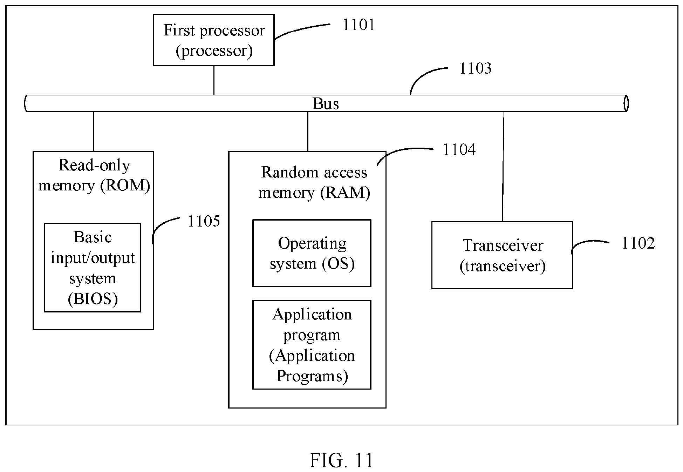

Correspondingly, corresponding to the foregoing method, an embodiment of this application further discloses a terminal apparatus. As shown in a schematic diagram of a structure shown in FIG. 11, the terminal apparatus includes:

at least one first processor 1101 and a memory.

The memory is configured to store program instructions.

The first processor is configured to invoke and execute the program instructions stored in the memory, so that the terminal apparatus performs all or some of the steps in the embodiment corresponding to FIG. 6.

Further, the terminal apparatus may further include a transceiver 1102 and a bus 1103, and the memory includes a random access memory 1104 and a read-only memory 1105.

The first processor is coupled to each of the transceiver, the random access memory, and the read-only memory by using the bus. When the terminal apparatus needs to run, a basic input/output system built in the read-only memory or a bootloader boot system in an embedded system is started to boot the terminal apparatus to enter a normal running state. After the terminal apparatus enters the normal running state, an application program and an operating system run in the random access memory, so that the terminal apparatus performs all or some of the steps in the embodiment corresponding to FIG. 6.

The apparatus in this embodiment of the present invention may correspond to the trajectory prediction apparatus in the embodiment corresponding to FIG. 6. In addition, the processor and the like in the apparatus may implement functions of the trajectory prediction apparatus in the embodiment corresponding to FIG. 6 or various steps and methods implemented by the trajectory prediction apparatus. For brevity, details are not described herein again.

During specific implementation, an embodiment of this application further provides a computer-readable storage medium. The computer-readable storage medium includes instructions. When a computer-readable medium disposed in any device runs on a computer, all or some of the steps in the embodiment corresponding to FIG. 6 may be implemented. A storage medium of the computer-readable medium may be a magnetic disk, an optical disc, a read-only memory (English: read-only memory, ROM for short), a random access memory (English: random access memory, RAM for short), or the like.

In addition, another embodiment of this application further discloses a computer program product including instructions. When the computer program product runs on an electronic device, the electronic device is enabled to implement all or some of the steps in the embodiment corresponding to FIG. 6.

The various illustrative logical units and circuits described in the embodiments of this application may implement or operate the described functions by using a general-purpose processor, a digital information processor, an application-specific integrated circuit (ASIC), a field programmable gate array (FPGA) or another programmable logical apparatus, a discrete gate or transistor logic, a discrete hardware component, or a design of any combination thereof. The general-purpose processor may be a microprocessor. Optionally, the general-purpose processor may be any conventional processor, a controller, a microcontroller, or a state machine. The processor may alternatively be implemented by a combination of computing apparatuses, for example, a digital information processor and a microprocessor, a plurality of microprocessors, a combination of one or more microprocessors and a digital information processor core, or any other similar configuration.

Steps of the methods or algorithms described in embodiments of this application may be directly embedded into hardware, a software unit executed by a processor, or a combination thereof. The software unit may be stored in a RAM memory, a flash memory, a ROM memory, an EPROM memory, an EEPROM memory, a register, a hard disk, a removable magnetic disk, a CD-ROM, or a storage medium of any other form in the art. For example, the storage medium may be connected to a processor, so that the processor may read information from the storage medium and write information into the storage medium. Alternatively, the storage medium may be integrated into a processor. The processor and the storage medium may be disposed in an ASIC, and the ASIC may be disposed in UE. Optionally, the processor and the storage medium may be disposed in different components of UE.

It should be understood that sequence numbers of the processes do not mean an execution sequence in various embodiments of this application. The execution sequence of the processes should be determined based on functions and internal logic of the processes, and should not be construed as any limitation on implementation processes of embodiments of this application.

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to embodiments of this application are all or partially generated. The computer may be a general purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or may be a data storage device, such as a server or a data center, integrating one or more usable media. The usable medium may be a magnetic medium (for example, a floppy disk, a hard disk, or a magnetic tape), an optical medium (for example, DVD), a semiconductor medium (for example, a solid state disk Solid State Disk (SSD)), or the like.

For same and similar parts between embodiments in this specification, mutual reference may be made. Each embodiment focuses on a difference from other embodiments. Especially, apparatus and system embodiments are basically similar to a method embodiment, and therefore are described briefly. For related parts, refer to partial descriptions in the method embodiment.

A person skilled in the art may clearly understand that, the technologies in embodiments of the present invention may be implemented by software in addition to a necessary general hardware platform. Based on such an understanding, the technical solutions of embodiments of the present invention essentially or the part contributing to the current technology may be implemented in a form of a software product. The computer software product is stored in a storage medium, such as a ROM/RAM, a hard disk, or an optical disc, and includes several instructions for instructing a computer device (which may be a personal computer, a server, a network device, or the like) to perform the methods described in embodiments or some parts of embodiments of the present invention.

For same and similar parts between embodiments in this specification, mutual reference may be made. Especially, the road constraint determining apparatus embodiments disclosed in this application are basically similar to the method embodiment, and therefore are described briefly. For related parts, refer to descriptions in the method embodiment.

The foregoing implementations in the present invention are not intended to limit the protection scope of the present invention.

## Claims

1. A trajectory prediction method, comprising:

determining at least one target point, wherein a distance between the target point and a vehicle falls within a first range;
obtaining at least one reference trajectory between a target and the at least one target point based on the at least one target point and a geographical location of the target; and
determining a predicted trajectory of the target from the at least one reference trajectory.

2. The method according to claim 1, wherein the determining at least one target point comprises:

determining a first reference point by querying a map marked with a reference point or by querying a text file indicating the reference point, wherein a distance between the first reference point and the vehicle falls within the first range; and
if a quantity of first reference points is not greater than n, determining the first reference point as the target point, wherein n is a preset positive integer; or
if a quantity of first reference points is greater than n, selecting the at least one target point from the first reference points.

3. The method according to claim 1, wherein the obtaining at least one reference trajectory between a target and the at least one target point comprises:

determining a historical trajectory from the target to the at least one target point as the at least one reference trajectory; or
determining a shortest trajectory between the target and any one of the at least one target point as a reference trajectory when a traffic rule is met.

4. The method according to claim 1, wherein the determining a predicted trajectory of the target from the at least one reference trajectory comprises:

determining a short-term trajectory of the target in next s seconds based on a movement trend of the target;
determining confidence of the at least one reference trajectory based on the short-term trajectory, wherein the confidence of the reference trajectory indicates a degree of fitting between the reference trajectory and the short-term trajectory; and
determining a reference trajectory with highest confidence as the predicted trajectory of the target.

5. The method according to claim 4, wherein the determining a short-term trajectory of the target in next s seconds based on a movement trend of the target comprises:

> determining, as the short-term trajectory, a trajectory that is obtained after the target moves for s seconds under the current movement trend; or
>
> determining a second parameter of the target based on the movement trend of the target, wherein the second parameter of the target comprises a historical movement speed and a historical movement direction of the target, a geographical location of the target, and environment information of the target; and
>
> after the second parameter is input into a neural network model, obtaining the short-term trajectory that is of the target in the next s seconds and that is output by the neural network model.

6. The method according to claim 4, wherein the determining confidence of the at least one reference trajectory based on the short-term trajectory comprises:

> determining a projection value of the short-term trajectory on the at least one reference trajectory according to the following formula, wherein the projection value is the confidence of the at least one reference trajectory:

$$z_{\vec{a}\to\vec{b}} = \left|\vec{a}\right| * \left|\vec{b}\right| * \cos \partial ,$$

> wherein
>
> $z_{\vec{a}\to\vec{b}}$ is a projection value of the short-term trajectory $\vec{a}$ on a reference trajectory $\vec{b}$ ; $\partial$ is an included angle between the short-term trajectory $\vec{a}$ and the reference trajectory $\vec{b}$ ; and the reference trajectory $\vec{b}$ is any one of the at least one reference trajectory.

7. The method according to any one of claims 1 to 6, further comprising:
adjusting a driving behavior of the vehicle after it is determined, based on the predicted trajectory, that the vehicle is about to collide with the target.

8. A trajectory prediction apparatus, comprising:

> a processor and a transceiver interface, wherein the transceiver interface is configured to receive information about a sensor; and
> the processor is configured to: determine at least one target point based on the information about the sensor, wherein a distance between the target point and a vehicle falls within a first range; obtain at least one reference trajectory between a target and the at least one target point based on the at least one target point and a geographical location of the target; and determine a predicted trajectory of the target from the at least one reference trajectory.

9. The apparatus according to claim 8, wherein

> the processor is specifically configured to: determine a first reference point by querying a map marked with a reference point or by querying a text file indicating the reference point, wherein a distance between the first reference point and the vehicle falls within the first range; and
> if a quantity of first reference points is not greater than n, determine the first reference point as the target point, wherein n is a preset positive integer; or
> if a quantity of first reference points is greater than n, select the at least one target point from the first reference points.

10. The apparatus according to claim 8, wherein

> the processor is specifically configured to determine a historical trajectory from the target to the at least one target point as the at least one reference trajectory; or
> the processor is specifically configured to determine a shortest trajectory between the target and any one of the at least one target point as a reference trajectory when a traffic rule is met.

11. The apparatus according to claim 8, wherein

> the processor is specifically configured to: determine a short-term trajectory of the target in next s seconds based on a movement trend of the target;
> determine confidence of the at least one reference trajectory based on the short-term trajectory, wherein the confidence of the reference trajectory indicates a degree of fitting between the reference trajectory and the short-term trajectory; and
> determine a reference trajectory with highest confidence as the predicted trajectory of the target.

12. The apparatus according to claim 11, wherein

> the processor is specifically configured to determine, as the short-term trajectory, a trajectory that is obtained after the target moves for s seconds under the current movement trend; or
> the processor is specifically configured to: determine a second parameter of the target based on the movement trend of the target, wherein the second parameter of the target comprises a historical movement speed and a historical movement direction of the target, a geographical location of the target, and environment information of the target; and

after the second parameter is input into a neural network model, obtain the short-term trajectory that is of the target in the next s seconds and that is output by the neural network model.

13. The apparatus according to claim 11, wherein

the processor is specifically configured to determine a projection value of the short-term trajectory on the at least one reference trajectory according to the following formula, wherein the projection value is the confidence of the at least one reference trajectory:

$$z_{\vec{a}\to\vec{b}} = \left|\vec{a}\right| * \left|\vec{b}\right| * \cos\partial \ ,$$

wherein

$z_{\vec{a}\to\vec{b}}$ is a projection value of the short-term trajectory $\vec{a}$ on a reference trajectory $\vec{b}$ ; $\partial$ is an included angle between the short-term trajectory $\vec{a}$ and the reference trajectory $\vec{b}$ ; and the reference trajectory $\vec{b}$ is any one of the at least one reference trajectory.

14. The apparatus according to any one of claims 8 to 13, wherein
the processor is further configured to adjust a driving behavior of the vehicle after it is determined, based on the predicted trajectory, that the vehicle is about to collide with the target.

15. A map, comprising:

a first layer, wherein
the first layer comprises at least one reference point, and the reference point comprises at least one of the following places: a place of a business industry, a place of an enterprise, and a place of a service industry.

16. The map according to claim 15, wherein
the reference point is a place passed by persons whose quantity is not less than a second threshold in a first time period.

17. A terminal apparatus, comprising:

at least one processor and a memory, wherein the memory is configured to store program instructions; and
the processor is configured to invoke and execute the program instructions stored in the memory, so that the terminal apparatus performs the trajectory prediction method according to any one of claims 1 to 7.

18. A computer-readable storage medium, wherein the computer-readable storage medium stores instructions; and when the instructions are run on a computer, the computer is enabled to perform the trajectory prediction method according to any one of claims 1 to 7.

Vehicle 100

**Traveling system 102**

Engine 118

Transmission apparatus 120

Energy source 119

Wheels 121

**Sensor system 104**

Global positioning system 122

Inertial measurement unit 124

Radar 126

Laser rangefinder 128

Camera 130

Computer vision system 138

Sensor fusion algorithm 140

**Planning control system 106**

Steering system 132

Accelerator 134

Braking unit 136

Route planning system 142

Control system 144

**Peripheral device 108**

Wireless communication system 146

Vehicle-mounted computer 148

Microphone 150

Speaker 152

Processor 113

Memory 114

Instruction 115

Computer system 101

Power supply 110

User interface 116

FIG. 1

Software deployment server 149

Network 127

Computer system 101

Network interface 129

USB port 125

Sensor 153

Transceiver 123

Camera 155

Bus bridge 111

Input/Output bus 113

I/O interface 115

Media disk 121

Hard disk drive 133

Hard disk drive interface 131

Processor 130

Display adapter 107

Input device 117

Display 109

System memory 135

Operating system 137

Computer shell 139

Kernel 141

Application program 143

Self-driving-related program 143

FIG. 2

100

Computer system 101

Server 320

Processor 321

Memory 322

Instruction 323

Data 324

FIG. 3

FIG. 4

FIG. 5

Determine at least one target point — S11

Obtain at least one reference trajectory between a target and the at least one target point — S12

Determine a predicted trajectory of the target from the at least one reference trajectory — S13

FIG. 6

FIG. 7(a)

Office building
NO. 22

Campus
entrance

Office building
NO. 24

Office building
NO. 25

Office building
NO. 23

FIG. 7(b)

FIG. 8

Office building

Dining hall

Fruit store

t1

t2

t3

Hospital

FIG. 9

1110

Processor

1120

Transceiver interface

FIG. 10

First processor
(processor) — 1101

— 1103

Bus

— 1104

Read-only
memory (ROM)

Basic
input/output
system
(BIOS)

— 1105

Random access
memory (RAM)

Operating
system (OS)

Application
program
(Application
Programs)

Transceiver
(transceiver) — 1102

FIG. 11

| INTERNATIONAL SEARCH REPORT | International application No. |
|---|---|
| | **PCT/CN2021/128973** |

**A. CLASSIFICATION OF SUBJECT MATTER**

G06Q 10/04(2012.01)i

According to International Patent Classification (IPC) or to both national classification and IPC

**B. FIELDS SEARCHED**

Minimum documentation searched (classification system followed by classification symbols)

G06Q

Documentation searched other than minimum documentation to the extent that such documents are included in the fields searched

Electronic data base consulted during the international search (name of data base and, where practicable, search terms used)

CNPAT, WPI, EPODOC, CNKI, IEEE: 目标, 轨迹, 车辆, 物体, 路人, 行人, 预测, 参考, 可能, 避让, 规避, 调整, 规划, 地图, 图层, 兴趣点, 置信, target, trajectory, trace, vehicle, pedestrian, passerby, predict, adjust, map, confidence

**C. DOCUMENTS CONSIDERED TO BE RELEVANT**

| Category* | Citation of document, with indication, where appropriate, of the relevant passages | Relevant to claim No. |
|---|---|---|
| X | US 2020139967 A1 (ZOOX, INC.) 07 May 2020 (2020-05-07) description, paragraphs [0036]-[0075] | 1-14, 17-18 |
| X | US 2006200384 A1 (ARUTUNIAN ETHAN B. et al.) 07 September 2006 (2006-09-07) description, paragraphs [0037]-[0052] | 15-16 |
| A | CN 111752272 A (BEIJING JINGDONG GANSHI TECHNOLOGY CO., LTD.) 09 October 2020 (2020-10-09) entire document | 1-18 |
| A | US 2016203163 A1 (SPARKGEO CONSULTING INC.) 14 July 2016 (2016-07-14) entire document | 1-18 |

☐ Further documents are listed in the continuation of Box C.    ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **21 January 2022** | **28 January 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

| International application No. |
| --- |
| **PCT/CN2021/128973** |

| Patent document cited in search report | | | Publication date (day/month/year) | Patent family member(s) | | | Publication date (day/month/year) |
| --- | --- | --- | --- | --- | --- | --- | --- |
| US | 2020139967 | A1 | 07 May 2020 | WO | 2020097011 | A2 | 14 May 2020 |
| | | | | EP | 3877897 | A2 | 15 September 2021 |
| | | | | CN | 112955902 | A | 11 June 2021 |
| US | 2006200384 | A1 | 07 September 2006 | None | | | |
| CN | 111752272 | A | 09 October 2020 | None | | | |
| US | 2016203163 | A1 | 14 July 2016 | CA | 2876953 | A1 | 08 July 2016 |

Form PCT/ISA/210 (patent family annex) (January 2015)